# EUROPÄISCHE PATENTSCHRIFT

(11) **EP 0 537 603 B1**
(45) Veröffentlichungstag und Bekanntmachung des Hinweises auf die Patenterteilung: **13.09.1995**
(21) Anmeldenummer: 92117075.9
(22) Anmeldetag: 07.10.1992
(51) Int. Cl.: F01N 7/14, F01N 7/08, F01N 1/02, F16L 59/06

(54) **Doppelwandiges luftisoliertes Rohr für Abgasanlagen in Fahrzeugen**
Double-walled air-insulated pipe for exhaust installations in vehicles
Tuyau à paroi double, isolé par de l'air, pour des installations d'échappement de véhicules

(30) Priorität: 18.10.1991 DE 4134466
(43) Veröffentlichungstag der Anmeldung: 21.04.1993
(73) Patentinhaber: Firma J. Eberspächer, 73730 Esslingen (DE)
(72) Erfinder: Schlenker, Friedrich, Dipl.-Ing., W-7310 Plochingen (DE); Wörner, Siegfried, W-7300 Esslingen (DE)

(56) Entgegenhaltungen:
- DE-B- 2 220 921
- DE-U- 8 812 762
- DE-U- 8 912 161
- DE-U- 9 102 926
- US-A- 3 850 453
- US-A- 4 356 885

## Beschreibung

Die Erfindung betrifft ein doppelwandiges Rohr für Abgasanlagen in Fahrzeugen mit einem Innenrohr und einem Außenrohr, die einen Ringraum begrenzen, wobei das Innenrohr und das Außenrohr an der einen Seite fixiert sind und im Abstand hierzu in dem Ringraum Distanzhalter aufweisen.

Bei Abgasanlagen in Fahrzeugen wird das den Motor verlassende Abgas über die Abgasleitung und in ihrem Verlauf angeordneten Schalldämpfern und gegebenenfalls auch Reinigungseinrichtung abgeführt. Dabei tritt das Abgas mit extrem hoher Temperatur in einzelnen Leitungsabschnitten in die Abgasrohrleitung ein, die dadurch entsprechend hoch aufgeheizt wird. Da die Abstrahlung dieser Wärme auf die Bodengruppe des Fahrzeuges wegen der hohen Temperaturen unerwünscht ist, werden für derartige Abgasleitungen doppelwandige Rohre verwendet, wobei der zwischen dem Innenrohr und dem Außenrohr gebildete Ringraum als Luftisolierung wirkt. Dieses gilt insbesondere für Abgasanlagen mit einer Einrichtung zur Abgasreinigung, z.B. mittels eines katalytisch wirksam beschichteten Abgaskatalysators, da bei diesen Anordnungen das Abgas mit hoher Temperatur dem Katalysator zugeführt werden muß.

Bei diesen bekannten luftisolierten Doppelrohren tritt jedoch das Problem der unterschiedlichen Längenänderung zwischen dem heißen Innenrohr und dem der Umgebungsluft ausgesetzten Außenrohr auf. Es wird daher bei den bekannten Anordnungen die Dichtung zwischen dem Innenrohr und dem Außenrohr, die erforderlich ist, um eine Beaufschlagung des Außenrohres mit dem heißen Abgas zu vermeiden, so ausgestaltet, daß sie bei ausreichender Dichtwirkung eine Längenänderung noch zuläßt. Diese Dichtung dient zugleich als abstandhaltendes Element zwischen dem Innenrohr und dem Außenrohr. Bei fest eingesetzten, starren Dichtungen besteht die Gefahr der Verkantung des Dichtelementes und damit einer Verklemmung des Innenrohres, so daß Formänderungen des heißen Innenrohres auftreten können, ferner müssen die Dichtringe entsprechend der zu erwartenden Temperaturbelastung mit genauer Einhaltung der vorgegebenen Toleranzen gefertigt werden. Damit ist ein hoher Aufwand für Fertigung und Montage verbunden. Zur Vermeidung insbesondere des letztgenannten Nachteils ist nach dem DE-GM 89 12 161 die Ringdichtung durch einen verschieblichen Lagerring gebildet und im Bereich des Lagerringes eines der Rohre zylindrisch und das andere Rohr sich in Richtung weg von der Fixierung konisch erweiternd ausgebildet, wobei der Dicht-/Lagerring aus verdichtetem Drahtgestrick bestehen kann. Dadurch, daß bei dieser Anordnung der radiale Abstand zwischen dem Innenrohr und dem Außenrohr im Bereich des Lagerringes nicht konstant ist, sondern sich in axialer Richtung der Rohre verändert, soll ein Verklemmen des Lagerringes verhindert werden. Auch diese Anordnung ist für eine Massenherstellung noch zu aufwendig, insbesondere hinsichtlich der Montage. Ein weiterer Nachteil ergibt sich dadurch, daß bei dieser bekannten Anordnung zur Lagerung des umlaufenden Ringes sowohl das Innenrohr als auch das Außenrohr verformt werden muß und beide Verformungen korrespondieren müssen.

Eine aus einem unterteilten inneren Mantelrohr und einem durchgehenden äußeren Mantelrohr gebildete Anordnung mit zwei katalytisch beschichteten Wabenkörpern zur Abgasreinigung ist in dem DE-U-88 12 762 beschrieben. Diese Anordnung zeigt eine Katalysatorhalterung in einem Gehäuse, bei welcher ein inneres geteiltes Mantelrohr in seinem übergreifenden Bereich einen Schiebesitz bildet und wobei dieses Mantelrohr an dem Wabenkörper anliegt und ihn beidseitig mit nur einem geringen Abschnitt überragt. Mit dieser Anordnung soll eine Umströmung des Katalysators von ungereinigtem Abgas verhindert werden. Der Ringspalt in dieser Anordnung ist wegen der unterschiedlichen Ausdehnung des Wabenkörpers mit metallischer Umhüllung gegenüber dem äußeren Mantelrohr erforderlich, er hat keine Funktion als Luftspaltisolierung.

Der Erfindung liegt die Aufgabe zugrunde, ein doppelwandiges luftisoliertes Rohr für Abgasanlagen von Brennkraftmaschinen aufzuzeigen, bei welchem Verkantungen und Verklemmungen infolge der thermisch bedingten Längen/Durchmesseränderungen oder bei dem Zusammenbau der Rohre vermieden werden, das ferner auch bei großen Längen einfach zusammenzubauen ist und das ferner noch bezüglich der Schalldämpfung, insbesondere bei den höheren Eigenfrequenzen verbessert wird.

Die Lösung dieser Aufgabe besteht bei einem doppelwandigen Rohr nach dem Oberbegriff des Anspruches 1 darin, daß das Distanzelement in einem an einem der Rohre fest angeordneten Käfig mit U-förmigem Querschnitt, dessen Schenkel kleiner sind als die Dicke des Distanzelementes, angeordnet ist.

Es hat sich gezeigt, daß durch diese Lösung eine wesentliche Vereinfachung in der Fertigung erreicht wird, was bei einem Massenartikel, wie es Abgasrohre für Schalldämpferanlagen sind, wesentlich ist. Bei dieser erfindungsgemäßen Anordnung braucht nur maximal ein Rohr, das Innenrohr verformt zu werden.

Es hat sich überraschenderweise gezeigt, daß es zum Erreichen einer wirksamen Luftisolierung keiner Abdichtung des Ringraumes durch umlaufende Dichtelemente bedarf, sondern daß die Distanzhaltung der Rohre zueinander das für die Wirksamkeit wesentliche Merkmal ist und daß selbst einem Volumenanschluß dienende offene Spalte, auch eine stirnseitige Eintrittsöffnung in den Ringraum zwischen Innenrohr und Außenrohr, die isolierende Wirkung praktisch nicht herabsetzt. Durch die erfindungsgemäße Anordnung wird daher der luftisolierende Ringraum als Resonatorkammer angeschlossen, wodurch sich noch zusätzlich eine Verbesserung der Schalldämpfung, insbesondere im Bereich höherer Eigenfrequenzen ergibt.

Eine Weiterführung der Erfindung ist dadurch gekennzeichnet, daß als Distanzelemente einzelne Distanzstücke angeordnet sind, die nur einen geringen Teil des Ringraumquerschnittes abdecken und jeweils in einem eigenen Käfig gehalten sind.

Bei einer bevorzugten Ausführung der Erfindung sind die einzelnen Distanzstücke in einer Ebene angeordnet. Dabei hat es sich als zweckmäßig erwiesen, eine ungerade Anzahl von Distanzstücken anzuordnen, besonders vorteilhaft ist die Anordnung von drei Distanzstücken in gleichmäßiger Verteilung am Umfang. Die Distanzstücke können auch auf mehreren Ebenen verteilt angeordnet sein, z.B. auf einem gedachten langgezogenen Gewindegang. Bei der besonders bevorzugten Lagerung mit drei gleichmäßig in einer Ebenen verteilten Distanzstücken ist hierdurch bereits eine lagesichere und damit abstandhaltende Lagerung des Innenrohes gegenüber dem Außenrohr verbunden und ein maximaler Resonatorraum ausschließbar.

Für die Lagerung und Befestigung der Distanzelemente bzw. Distanzstücke hat es sich als zweckmäßig erwiesen, daß jedes der Distanzelemente bzw. Distanzstücke in einem mit einem der Rohre fest verbundenen Käfig angeordnet ist. In bevorzugter Weise erfolgt diese Lagerung und Befestigung in dem Außenrohr. Dieser Käfig kann als Ring mit U-förmigem Querschnitt ausgebildet sein, dessen Schenkel kleiner sind als die Dicke der Distanzelemente bzw. Distanzstücke. Bei dieser Anordnung wird das Distanzmittel (Distanzelement bzw. Distanzstück) in den Ring eingelegt und z.B. durch leichtes Einpressen der Schenkel des Ringes gehalten und so als ein Bauteil montiert. Dabei können bei der Lagerung die einzelnen Distanzstücke in jeweils gesonderte Käfige gelagert sein. Dazu ist zunächst das als Massenartikel vorzugsweise aus einem verdichteten Drahtgeflecht gebildete Distanzstück in einem etwa topfförmigen oder kastenförmigen Käfig gelagert. Solche so gefaßte Distanzstücke können in den benötigten großen Stückzahlen leicht auf Lager gehalten werden. Bei dem Zusammenbau des Doppelrohres werden diese im Käfig gelagerten Distanzstücke in zuvor in dem Außenrohr angeordnete entsprechende Ausnehmungen eingesetzt und mit dem Außenrohr, z.B. durch Schweißen, fest verbunden. Dabei können Toleranzen in der Dicke der Distanzstücke durch unterschiedlich tiefes Einbringen in die Ausnehmungen leicht ausgeglichen werden. Die Distanzstücke können auch auf dem Innenrohr durch Aufschweißen des Distanzstückes samt Käfig angebracht werden und werden beim Zusammenbau mit dem Innenrohr in das Außenrohr verbracht.

Während bei den bekannten Anordnungen das Innenrohr nur maximal bis in den Bereich des Abgasaustritts, also dem Endbereich des Außenrohres geführt ist und so Zwitterlösungen entstehen, ist bei der Anordnung gemäß der Erfindung die Doppelwandigkeit bis zum Austritt, also über die gesamte Länge gegeben. Um dieses zu erreichen, ist das Außenrohr einstückig (durchgehend) und das Innenrohr geteilt ausgebildet, und die Endabschnitte der einander zugewandten Innenrohre sind einander übergreifend angeordnet. Bei dieser Anordnung wird der Ringraum nach innen durch die übergreifenden, aufeinanderliegenden inneren Endabschnitte des Innenrohres auch an der Stelle abgeschlossen, an welcher das Innenrohr einen die Längenänderungen aufnehmenden Gleitsitz aufweist. Die Distanzhalterung erfolgt durch die, wie oben beschrieben, erfolgte Anordnung der Distanzmittel. Insbesondere bei längeren Leitungen hat es sich als zweckmäßig erwiesen, daß das Außenrohr und das Innenrohr geteilt ausgebildet sind und die jeweiligen einander zugewandten Endabschnitte einander übergreifend angeordnet sind, da damit Fertigungsvorteile verbunden sind.

Nach einer bevorzugten Ausgestaltung ist das Innenrohr aus drei unabhängigen Teilabschnitten gebildet, von denen der erste Abschnitt und der dritte Abschnitt eintritts- bzw. austrittsseitig mit dem nach innen bis auf das Innenrohr gezogenen Außenrohr fest verbunden sind und an ihren rohrinnen liegenden Enden zu einem Schiebesitz an das Außenrohr herangeführt sind und der zweite, mittlere Abschnitt in Distanzmitteln gelagert ist. Bei dieser Ausführung entsteht bei dem mittleren Abschnitt jeweils stirnseitig ein dem Ringraumquerschnitt entsprechender Spalt, durch den eine besonders gute akustische Ankopplung des Ringraumes als Resonatorkammer erfolgt. Ein Eindringen von heißem Abgas in den Ringraum erfolgt praktisch nicht, das Luftvolumen kann nahezu als stehend angesehen werden. Dadurch ist die Luftisolierwirkung gesichert.

Bei einer besonders bevorzugten Ausbildung der Erfindung ist das Innenrohr ebenfalls aus drei Teilabschnitten gebildet, von denen der erste und der dritte Abschnitt eintrittsseitig bzw. austrittsseitig mit dem nach innen bis auf das Innenrohr gezogene Außenrohr fest verbunden und im Bereich ihrer im Außenrohrinnen gelegenen Enden in Distanzmitteln gelagert sind, während der zweite, mittlere Abschnitt an beiden Endbereichen bis auf einen geringen Abstand an das Außenrohr herangeführt ist. Bei dieser Weiterbildung bildet der den ersten und der den dritten Abschnitt umgebende Ringraum eine besonders wirksame Resonatorkammer.

In den Figuren 1 bis 7 sind Ausführungsbeispiele vereinfacht dargestellt. Es zeigt:
- Fig. 1: einen Längsschnitt durch ein erstes Ausführungsbeispiel mit einem ringförmigen Dichtelement;
- Fig. 2: einen Längsschnitt wie in Fig. 1 mit einem weiteren Ausführungsbeispiel mit einem Distanzelement;
- Fig. 3: einen Längsschnitt wie in Fig. 2 mit einer weiteren Varianten mit Distanzstücken;
- Fig. 4: einen Querschnitt zu Fig. 3;
- Fig. 5: einen Längsschnitt wie in Fig. 2 mit einer weiteren Varianten mit Distanzstücken;
- Fig. 6: einen Querschnitt zu Fig. 5;
- Fig. 7: eine weitere Variante mit einem Mittelabschnitt nach Fig. 4.

In den Figuren sind jeweils gleiche Positionen mit gleichen Bezugszeichen versehen. Die mit Pfeilen bezeichneten Stellen stellen feste Verbindungen, z. B. Schweißstellen dar.

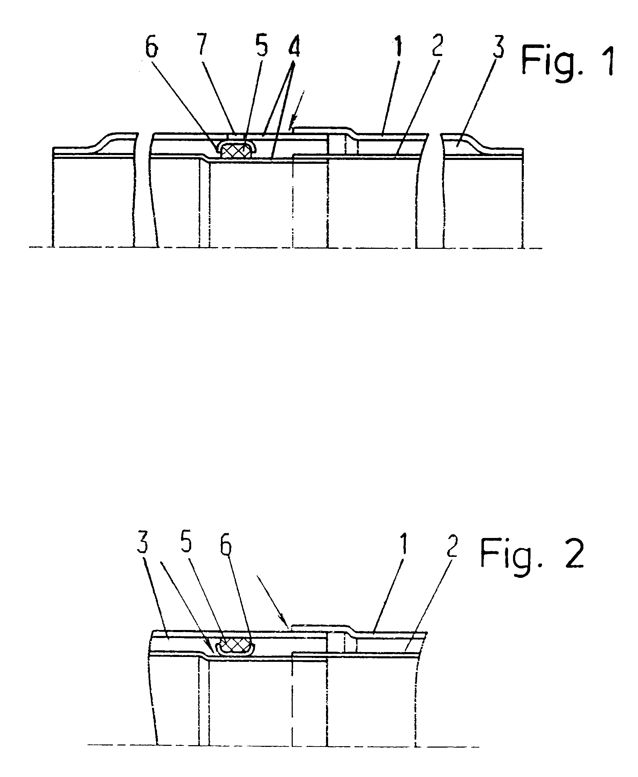

In Fig. 1 ist als Ausführungsbeispiel eine doppelwandige luftisolierte Abgasleitung ohne Schalldämpfer oder Abgasreinigungseinrichtungen dargestellt. Derartige Rohre werden als Zwischenrohre zwischen dem Motorabgaskrümmer und dem Schalldämpfer bzw. einer Abgasreinigungsanlage oder zwischen den einzelnen Einbauten verwendet. Das Außenrohr 1 umhüllt das Innenrohr 2 unter Bildung eines Ringraumes 3, so daß eine luftspaltisolierte Anlage entsteht. Eintritts- und austrittsseitig ist das Außenrohr 1 an das Innenrohr 2 herangeführt und beide Rohre 1, 2 fest verbunden.

Bei dem Ausführungsbeispiel nach Fig. 1 sind das Innenrohr 2 und das Außenrohr 1 geteilt und an der Stelle 4 überlappend zusammengeführt. Dabei liegt der austrittsseitige Abschnitt des Außenrohres 1 auf dem eintrittsseitigen Abschnitt auf, und beide Abschnitte sind durch Schweißen miteinander verbunden. Das Innenrohr 2 liegt mit dem austrittsseitigen Abschnitt auf dem Ende des eintrittsseitigen Abschnittes lose auf und bildet so einen Schiebesitz. Dieser ist so bemessen, daß ein sicheres Gleiten auch bei Wärmebelastung gewährleistet ist. In dem Ausführungsbeispiel ist das eintrittsseitige Innenrohr im Bereich der Stelle 4 um etwa eine Wandstärke eingezogen zur Bildung des Schiebesitzes. Die Ausgestaltung des austrittsseitigen Endes des doppelwandigen Abgasrohres kann auch abweichend von der beschriebenen Ausführung erfolgen, wenn das nachfolgende Teil dieses verlangt, so z. B. für den Anschluß einer Einrichtung zur Abgasreinigung, bei welcher das Innenrohr weiter herausragt und in den Eintrittsstutzen der Reinigungsanlage hereingeführt wird und dieser Eintrittsstutzen sodann auf dem Innenrohr verschweißt wird, gegebenenfalls zusammen mit dem Außenrohr der Abgasleitung. Gleiches gilt auch eintrittsseitig.

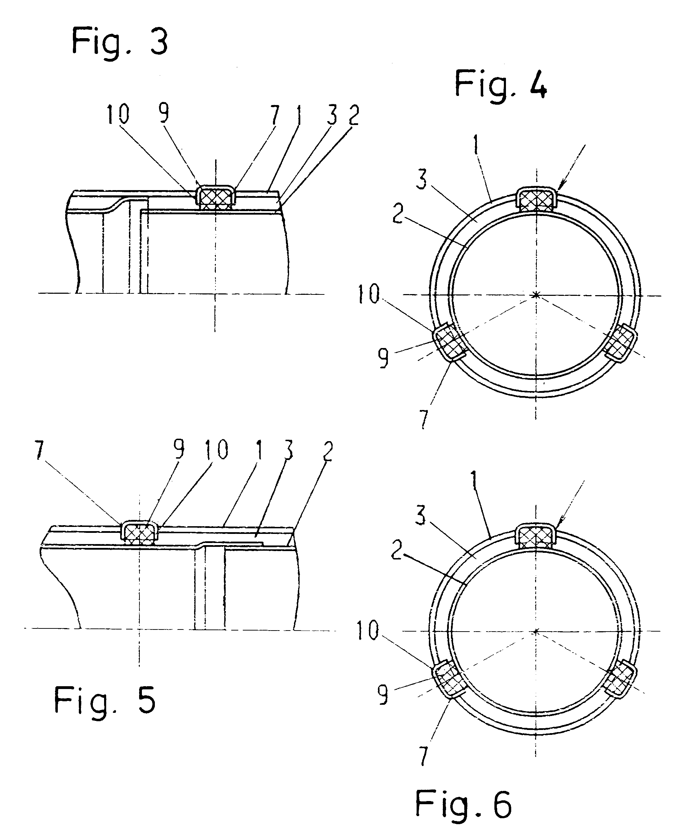

Die Abstandshalterung zwischen Innenrohr 2 und Außenrohr 1 erfolgt durch ringförmige Distanzelemente 5 aus geeignetem Material wie verdichtetem Metallgestrick oder Quellmattenmaterial. In dem dargestellten Ausführungsbeispiel ist nur ein Distanzelement 5 in dem eintrittsseitigen Abschnitt des doppelwandigen Rohres dargestellt. Es kann, je nach Länge des Rohres, auch noch mindestens ein weiteres Distanzelement 5 in dem austrittsseitigen Abschnitt angeordnet sein. Dieses Distanzelement 5 ist in einem ringförmigen Käfig 6 gehalten, der als umlaufender Ring in dem Außenrohr 1 gelagert und befestigt ist. Zur Befestigung des Käfigs 6 sind in dem Außenrohr 1 Ausnehmungen 7 angeordnet, z.B. Bohrungen oder Schlitze. Der unterhalb der Ausnehmung 7 eingesetzte Käfig 6 wird durch Schweißung in dieser Ausnehmung 7 gehalten. Das Distanzelement 5 wird in dem Käfig 6 dadurch gehalten, daß an einigen Stellen die Schenkel des Käfigs 6 nach innen gegen das eingesetzte Distanzelement 5 verbogen werden. Natürlich sind auch andere Halterungen möglich. Es können anstelle des ringförmigen Distanzelementes 5 in den Käfig 6 auch einzelne Distanzhalter eingesetzt und verklemmt werden. Bei der Anordnung von vorzugsweise drei Distanzhaltern erfolgt eine sichere Abstandshalterung zwischen dem Innenrohr 2 und dem Außenrohr 1 bei größtmöglichem Luftisolierspalt. Ein entsprechendes Ausführungsbeispiel ist in den Fig. 3 bis 7 dargestellt und wird dort beschrieben.

Das Ausführungsbeispiel nach Fig. 2 stellt eine Variante des Beispiels nach Fig. 1 dar mit auf dem Innenrohr 2 durch Schweißung gehaltenen Käfig 6 samt Distanzelement 5. Die Zusammenführung der Abschnitte des Außenrohres 1 und des Innenrohres 2 erfolgt wie in Fig. 1 dargestellt und dort beschrieben.

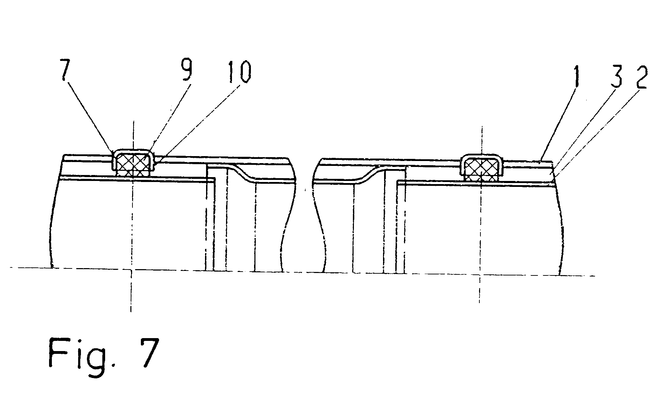

Bei den Ausführungsbeispielen nach den Fig. 3 bis 7 sind anstelle der ringförmigen Distanzelemente 5 und der Käfige 6 Distanzstücke 9 und andere Käfige 10 angeordnet. In diesen Fig. 3 bis 7 sind ebenfalls verschiedene Ausbildungen der Rohrführungen sowie der Zusammenführungen der Rohrabschnitte dargestellt. Dabei ist in den Beispielen nach den Fig. 3 und 7 jeweils das Innenrohr 2 in drei Abschnitte aufgeteilt.

In der Fig. 3 ist eine Anordnung dargestellt, bei welcher das Innenrohr 2 in drei Abschnitte aufgeteilt sein kann, während das Außenrohr 1 durchgehend ausgebildet ist. Der eintrittsseitige Abschnitt des Innenrohres 2 ist an seinem stromabseitigen Ende aufgeweitet auf nahezu den Innendurchmesser des Außenrohres 1, so daß ein Gleitsitz mit ausreichendem Spiel entsteht. Ebenso ist der austrittsseitige Abschnitt des Innenrohres 2 ausgebildet und angeordnet. Der mittlere Abschnitt des Innenrohres 2 besteht aus einem durchgehend glatten Rohr. Die Lagerung dieses Abschnittes in dem Außenrohr 1 erfolgt bei diesem Ausführungsbeispiel durch mehrere, vorzugsweise drei am Umfang verteilte Distanzstücke 9, wie in dem zugehörigem Schnitt, Fig. 4, dargestellt. Diese Distanzstücke 9 sind runde oder eckige "Kissen", vorzugsweise aus gepreßtem Stahlgestrick oder Quellfasermaterial. Sie sind in jeweils einem Käfig 10 gelagert und mit diesem in eine zugehörige Ausnehmung 7 des Außenrohres 1 eingesetzt und fest verbunden. Der jeweilige Käfig 10 ist als eine mit einem angeformten Rand versehene Scheibe ausgebildet. In dem Ausführungsbeispiel sind drei Distanzstücke 9 in einer Ebene angeordnet, sie können aber auch z.B. auf einer gewindegangartigen Kurve, d.h. in verschiedenen Ebenen angebracht werden. Diese Ausführung hat den Vorteil, daß nur ein geringer Montageaufwand erforderlich ist. So können z.B. zwei der drei Distanzstücke 9 samt Käfig 10 bereits in dem Außenrohr 10 vormontiert werden, sodann wird, evtl. erst später, das Innenrohr 2 eingeschoben und erst dann das dritte Distanzstück 9 samt Käfig 10. Bei dieser Ausbildung mit einem glatten mittleren Abschnitt des Innenrohres 2 ist der gesamte Ringraum 3 über diesen mittleren Abschnitt als Resonatorkammer angekoppelt und trägt so wesentlich zur Schalldämpfung bei. Die jeweiligen Endabschnitte des mittleren Abschnittes des Innenrohres 2 können bis in den an das Außenrohr 1 herangeführten Bereich der beiden anderen Abschnitte des Innenrohres 2 geführt werden, so daß praktisch kein Abgas den Ringraum durchströmt.

Die Fig. 5 und 6 zeigen vergleichbare Anordnung mit anderer Führung des Innenrohres 2. Dieses liegt mit dem eintrittsseitigen Endstück des ersten Abschnittes auf dem Endstück des zweiten Abschnittes auf und bildet so den Schiebesitz.

In der Fig. 7 ist eine weitere Ausgestaltung mit einem in drei Abschnitte geteilten Innenrohr 2 und Distanzhaltung durch Distanzstücke 9 in Käfigen 10 dargestellt. Bei dieser Ausführung sind der eintrittsseitige und der austrittsseitige Abschnitt in Distanzstücke 9 gelagert, während der mittlere zweite Abschnitt in seinen beiden Endbereichen auf einen Durchmesser nahezu dem Innendurchmesser des Außenrohres 1 aufgeweitet und so mit beidseitigem Schiebesitz in dem Außenrohr 1 angeordnet ist. Um eine z.B. durch die impulsartige Beaufschlagung durch das strömende Abgas bewirkte Verschiebung des relativ lose angeordneten mittleren Abschnittes zu verhindern und damit ein Anstoßen des mittleren Abschnittes gegen das Distanzstück 9 bzw. den Käfig 10, reicht der Endabschnitt des eintritts- bzw. austrittsseitigen Abschnittes des Innenrohres bis nahezu an die erweiterten Bereiche des mittleren Abschnittes heran, so daß im Extremfall nur diese Abschnitte aneinanderstoßen können.

Bei der vorliegenden Erfindung weisen auch die Unteransprüche mindestens teilweise selbständige Erfindungsmerkmale auf.

## Patentansprüche

1. Doppelwandiges luftspaltisoliertes Rohr für Abgasanlagen in Fahrzeugen
mit einem aus mindestens zwei Abschnitten bestehenden Innenrohr (2) und einem Außenrohr (1), die einen Ringraum (3) begrenzen,
wobei der stromab erste Abschnitt abgaseintrittsseitig und der nachfolgend zweite Abschnitt abgasaustrittsseitig an dem Außenrohr fixiert sind, und die Endabschnitte der einander zugewandten Innenrohrabschnitte einander übergreifend angeordnet sind,
und mit mindestens einem in dem Ringraum (3) angeordneten Distanzelement,
dadurch gekennzeichnet,
daß das Distanzelement (5) in einem an einem der Rohre (1, 2) fest angeordneten Käfig (6) mit U-förmigem Querschnitt, dessen Schenkel kleiner sind als die Dicke des Distanzelementes (5), angeordnet ist.

2. Doppelwandiges luftspaltisoliertes Rohr nach Anspruch 1, dadurch gekennzeichnet, daß als Distanzelement (5) einzelne Distanzstücke (9) angeordnet sind, die jeweils nur einen geringen Teil des Ringraumquerschnittes (3) abdecken und jeweils in einem eigenen Käfig (10) gehalten sind.

3. Doppelwandiges luftspaltisoliertes Rohr nach Anspruch 1 oder 2, dadurch gekennzeichnet, daß im Außenrohr (1) am Umfang verteilte Ausnehmungen (7) zur Befestigung des Käfigs (6) bzw. der Käfige (10) angeordnet sind.

4. Doppelwandiges Rohr nach einem der Ansprüche 1 bis 3, dadurch gekennzeichnet, daß die Distanzstücke (9) in einer Ebenen angeordnet sind.

5. Doppelwandiges Rohr nach einem der Ansprüche 1 bis 4, dadurch gekennzeichnet, daß am Umfang eine ungerade Zahl von Distanzstücken (9) angeordnet ist.

6. Doppelwandiges Rohr nach einem der Ansprüche 1 bis 5, dadurch gekennzeichnet, daß am Umfang drei Distanzstücke (9) angeordnet sind.

7. Doppelwandiges Rohr nach einem der Ansprüche 1 bis 6, dadurch gekennzeichnet, daß bei Aufteilung des Innenrohres (2) in drei Abschnitte die Lagerung in dem ersten und/oder dritten Abschnitt erfolgt.

## Claims

1. A double-walled pipe insulated by an air gap for exhaust gas installations in vehicles, having an inner pipe (2), comprising at least two portions, and an outer pipe (1) which delimit an annular chamber (3), the portion which is the first in the downstream direction being secured to the outer pipe on the exhaust gas inlet side and the successive, second portion being secured to the outer pipe on the exhaust gas outlet side, and the end portions of the inner pipe portions facing each other being disposed such that they overlap each another, and having at least one spacer element disposed in the annular chamber (3), characterized in that the spacer element (5) is disposed in a cage (6) which is rigidly disposed on one of the pipes (1, 2) and has a U-shaped cross-section whereof the legs are smaller than the thickness of the spacer element (5).

2. A double-walled pipe insulated by an air gap according to Claim 1, characterized in that individual spacer members (9) each of which only covers a small part of the cross-section of the annular chamber (3) and each of which is held in its own cage (10) are provided as the spacer element (5).

3. A double-walled pipe insulated by an air gap according to Claim 1 or 2, characterized in that recesses (7) distributed over the periphery are disposed in the outer pipe (1) in order to secure the cage (6) or cages (10) respectively.

4. A double-walled pipe according to any one of Claims 1 to 3, characterized in that the spacer members (9) are disposed in a plane.

5. A double-walled pipe according to any one of Claims 1 to 4, characterized in that an uneven number of spacer members (9) is disposed on the periphery.

6. A double-walled pipe according to any one of Claims 1 to 5, characterized in that three spacer members (9) are disposed on the periphery.

7. A double-walled pipe according to any one of Claims 1 to 6, characterized in that the mounting is effected in the first and/or third portion when the inner pipe (2) is divided into three portions.

## Revendications

1. Tuyau à double paroi isolé par une fente d'air pour installations d'échappement pour véhicules, comprenant un tuyau interne (2) composé d'au moins deux segments et un tuyau externe (1) qui délimitent un espace annulaire (3), le premier segment par rapport au sens de circulation des gaz d'échappement étant fixé au tuyau externe du côté de l'entrée des gaz d'échappement et le deuxième segment du côté de la sortie des gaz d'échappement, et les parties d'extrémité des segments de tuyau interne tournés l'un vers l'autre sont disposées en se chevauchant, comprenant également un élément d'écartement disposé dans l'espace annulaire (3), caractérisé en ce que l'élément d'écartement (5) est placé sur une cage (6) disposée fixement sur l'un des tuyaux (1, 2), laquelle présente une section transversale en forme de U dont les ailes sont plus petites que l'épaisseur de l'élément d'écartement (5).

2. Tuyau à double paroi isolé par une fente d'air selon la revendication 1, caractérisé en ce que plusieurs pièces d'écartement distinctes (9) sont disposées en tant qu'élément d'écartement (5), qui ne recouvrent chacune qu'une faible partie de la section transversale de l'espace annulaire (3) et sont chacune maintenues dans une cage (10) qui leur est propre.

3. Tuyau à double paroi isolé par une fente d'air selon la revendication 1 ou 2 caractérisé en ce que des évidements (7) destinés à fixer la cage (6) ou les cages (10) sont uniformément répartis sur le pourtour du tuyau externe (1).

4. Tuyau à double paroi selon l'une des revendications 1 à 3, caractérisé en ce que les pièces d'écartement (9) sont disposées dans un même plan.

5. Tuyau à double paroi selon l'une des revendications 1 à 4, caractérisé en ce qu'un nombre de pièces d'écartement (9) impair est disposé sur le pourtour.

6. Tuyau à double paroi selon l'une des revendications 1 à 5, caractérisé en ce que trois pièces d'écartement (9) sont disposées sur le pourtour.

7. Tuyau à double paroi selon l'une des revendications 1 à 6, caractérisé en ce que, en divisant le tuyau interne (2) en trois segments, le montage s'effectue dans le premier et/ou le troisième segment.
